# EUROPEAN PATENT SPECIFICATION

(11) **EP 4 155 815 B1**
(45) Date of publication and mention of the grant of the patent: **10.12.2025**
(21) Application number: 21808268.3
(22) Date of filing: 13.05.2021
(51) Int. Cl.: G02F 1/1337

(54) **LIGHT PROJECTING DEVICE, AND EXPOSURE DEVICE PROVIDED THEREWITH**
LICHTPROJEKTIONSVORRICHTUNG UND DAMIT AUSGESTATTETE BELICHTUNGSVORRICHTUNG
DISPOSITIF DE PROJECTION DE LUMIÈRE ET DISPOSITIF D'EXPOSITION POURVU DE CELUI-CI

(30) Priority: 21.05.2020 JP 2020089242; 15.03.2021 JP 2021041003
(43) Date of publication of application: 29.03.2023
(73) Proprietor: Phoenix Electric Co., Ltd., Himeji-shi, Hyogo 679-2122 (JP)
(72) Inventor: MATSUMOTO Hiromu, Himeji-shi Hyogo 679-2122 (JP); INOUE Tomohiko, Himeji-shi Hyogo 679-2122 (JP); YAMASHITA Kenichi, Himeji-shi Hyogo 679-2122 (JP)
(74) Representative: HKW Intellectual Property PartG mbB
(86) International application number: PCT/JP2021/018166
(87) International publication number: WO 2021/235305

(56) References cited:
- WO-A1-2015/040664
- CN-A- 108 803 150
- CN-U- 209 014 871
- JP-A- 2011 076 033
- JP-A- 2013 228 533
- US-A1- 2019 129 256
- US-A1- 2019 204 751

## Description

### BACKGROUND OF THE INVENTION

### Field of the Invention

The present invention relates to a light emitting device mainly used for light exposure in manufacturing a liquid crystal panel and to an exposure apparatus including the same.

### Background Art

When used for a display panel driven in a TN (Twisted Nematic) mode, a liquid crystal is encapsulated between a pair of glass substrates provided with transparent electrodes on the inner surfaces thereof. Here, applying voltage to the transparent electrodes is not enough to normally operate the liquid crystal. This is because liquid crystal molecules are in a loose arrangement.

In order to normally operate the liquid crystal in the TN mode, the liquid crystal molecules are required to be aligned in a predetermined direction and be raised in a predetermined direction as well. Specifically, the liquid crystal molecules are aligned in the predetermined direction, while being tilted at 3° or so with respect to the pair of glass substrates. The tilt angle is referred to as a pre-tilt angle.

Besides, regarding the pair of glass substrates capable of aligning the liquid crystal, one is disposed to be aligned with an X direction, while the other opposed to the one is disposed to be aligned with a Y direction perpendicular to the X direction (TN mode).

Thus, a liquid crystal alignment process is required for manufacturing a liquid crystal panel; a rubbing process of rubbing the surface of a glass substrate has been conventionally executed (e.g., JP 2007-17475 A). The rubbing process refers to a processing method of forming a film capable of aligning crystal liquid molecules in a predetermined direction by rubbing an organic polymer film disposed on a glass substrate with a shaggy cloth or so forth in the predetermined direction.

The TN mode with high-speed response has been made popular with prevalence of the rubbing process, whereby mass production of liquid crystal panels with stable performance has been realized at a low cost. As a result, liquid crystal monitors have been prevailed as display monitors for office automation equipment (e.g., personal computers) and monitors for game consoles.

However, the rubbing process has had the following drawbacks that may lead to deterioration in reliability: poor evenness, chances of occurrence of electrostatic destruction of a TFT (Thin-Film Transistor), and attaching of waste powder material produced in rubbing.

In addition, the pre-tilt angle achievable by the rubbing process is, as described above, 3° or so in the TN mode representative of a horizontally aligned liquid crystal mode; hence, it has been difficult to produce a display panel with a liquid crystal mode compatible with driving at low voltage and high-speed response.

In order to deal with the drawbacks of the rubbing process described above, an exposure machine, capable of executing a photo-alignment process, has been proposed at present and a long arc mercury lamp has been tried to be used as a light source for the exposure machine.

However, even the exposure machine using the long arc mercury lamp has a drawback. In general, a material provided as a target for exposure is set to have photosensitive characteristics so as to react to light in a specific wavelength band. On the other hand, with reference to spectroscopic characteristics of light emitted from the mercury lamp, it is understandable that the light is composed of a lot of bright line spectra of mercury.

Because of this, when the mercury lamp is employed as a light source for light exposure, many of the rays of light have wavelengths deviating from the photosensitive characteristics set for the exposure target material; hence, it is concerned that overexposure is undesirably executed for the exposure target material with the rays of light having the wavelengths deviating from the wavelength band of the photosensitive characteristics.

Obviously, the rays of light having the wavelengths deviating from the photosensitive characteristics (to longer and shorter wavelength sides) can be cut off by a selective wavelength reflective film. In this case, a narrow band cut filter (band-pass filter) is required, and simultaneously, high precision is required; hence, this inevitably results in increase in device cost.

Moreover, the rays of light emitted from the long arc mercury lamp diffuse in a wide range; hence, it is difficult to control the emission angle of the rays of light from the mercury lamp, although the light emission angle is important for executing the photo-alignment process. To deal with the difficulty, it has been considered to implement a method of blocking surplus rays of light with, for instance, a louver or so forth; however, this results in another drawback of deterioration in efficiency of utilizing the rays of light emitted from the mercury lamp.

Furthermore, it has been considered to implement a method of obliquely emitting collimated (paralleled) light onto a glass substrate; however, an optical system is herein made complicated. Thus, it is plausible that the method has a drawback of increase in device size and device cost.

US 2019 / 129256 A1 discloses a method related to preparing a vertical alignment layer with a preferred azimuthal angle for a liquid crystal device are provided. Such a method of preparation comprises preparing an alignment layer mixture of a polymeric vertical alignment material, an azo compound photo-aligned material, a reactive mesogen or liquid crystal monomer, a polyamic acid, a photo- or thermal-initiator, and an organic solvent, coating the alignment layer mixture onto a substrate, and irradiating the coated substrate with UV or blue light at an oblique angle.

CN 209 014 871 discloses an exposure head for photo-alignment and an exposure system for photo-alignment using the exposure head, the exposure head comprising a plurality of parallel light units and an exposure head control unit, and the exposure system comprising an exposure chamber and the exposure head arranged in the exposure chamber. The substrate is parallel to the emergent surface of the exposure head and is arranged below the exposure head so as to be exposed under the irradiation of the exposure head. According to the exposure head and the exposure system for photo-orientation disclosed by the utility model, the plurality of parallel light units forming the exposure head are obliquely arranged, so that the distances from the light rays irradiated to the substrate at a specific angle to the substrate are the same, the substrate is enabled to receive uniform illumination intensity, and a more stable exposure effect can be realized.

US 2019 / 204751 A1 discloses a method for manufacturing a display panel including: providing a first substrate and an exposure system, wherein the exposure system includes a light source module and a first shielding unit; disposing the first shielding unit at a position between the first substrate and the light source module in the initial state; moving the first shielding unit along a first direction; moving the light source module to pass through the first shielding unit along a second direction different from the first direction, and exposing the first substrate to the light emitted by the light source module; moving the light source module along the opposite direction of the second direction; and moving the first shielding unit back to the position between the first substrate and the light source module along the opposite direction of the first direction.

JP 2013 228533 A discloses a polarizer unit in which a plurality of wire grid polarizers for polarizing light are arrayed horizontally. Light shielding areas blocking transmission of light are provided along boundaries between adjacent wire grid polarizers, and the light shielding areas are provided so that a length ratio of the light shielding areas and light non-shielded areas of the wire grid polarizers, which are not shielded from light by the light shielding areas, is uniform in a carrying direction orthogonal to an array direction of the wire grid polarizers throughout in the array direction of the wire grid polarizers.

The present invention has been produced in view of the drawbacks described above. It is an object of the present invention to provide a light emitting device for an exposure apparatus, whereby a photo-alignment process can be executed with a simple and convenient configuration.

### SUMMARY OF THE INVENTION

According to one aspect of the present invention, a light emitting device is provided that has the features of claim 1.

The light source includes a plurality of LED modules, each of which accommodates the plurality of LEDs. The light source is provided as one of a plurality of light sources aligned along a moving direction of the work. The electricity to be inputted to the plurality of LEDs is adjusted by a single driving electric power supply when the plurality of LEDs are accommodated in each of a plurality of LED modules that are separately disposed in the plurality of light sources on a one-to-one basis so as to be aligned straight along the moving direction of the work.

Preferably, the light emitting device further includes a measuring instrument measuring the illuminance on the work or the exposure surface. When unevenness of the rays of light on the work or the exposure surface is found by calculation based on values measured by the measuring instrument as the illuminance and the cumulative illuminance of the rays of light on the work or the exposure surface, the unevenness of the rays of light on the work or the exposure surface is solved by changing the electricity to be inputted to at least one of the plurality of LEDs located in correspondence to the unevenness of the rays of light on the work or the exposure surface.

Preferably, the polarizing element is shaped to be elongated in a direction of the rays of light emitted from the light source.

Preferably, the polarizing element is formed by a plurality of wire grid pieces. Each of the plurality of wire grid pieces has a trapezoidal shape. Each adjacent pair of the plurality of wire grid pieces is disposed such that a trapezoidal bottom side of one of the each adjacent pair is aligned straight with a trapezoidal top side of the other of the each adjacent pair in a perpendicular direction to a direction of the rays of light emitted from the light source.

Preferably, the polarizing element is provided as one of a single or plurality of polarizing elements, whereas the light source is provided as one of a plurality of light sources; besides, the single or plurality of polarizing elements lesser in number than the plurality of light sources.

### Advantageous Effects of Invention

In the light emitting device according to the present invention, each of the plurality of LEDs has the optical axis tilting at the first angle with respect to the work and the second angle, defined as half of the light distribution angle of the rays of light emitted from each of the plurality of LEDs, is set to be less than the first angle, whereby all the rays of light emitted from each of the plurality of LEDs are directed closer to the optical axis of each of the plurality of LEDs than to the normal directed to the work from each of the plurality of LEDs.

Accordingly, it is made possible to provide the light emitting device for a light exposure apparatus, whereby a photo-alignment process can be executed to increase in number of rays of light emitted at effective emission angles with a simple and convenient configuration.

### BRIEF DESCRIPTION OF THE DRAWINGS

Referring now to the attached drawings which form a part of this original disclosure:
FIG. 1 is a diagram showing a light emitting device 10 to which the present invention is applied;
FIG. 2 is a front view of the light emitting device 10 including a light source 12 composed of a plurality of LED modules 100;
FIG. 3 is a perspective view of the light emitting device 10 including an angle adjusting mechanism 110;
FIG. 4 is a side view of the light emitting device 10 including the angle adjusting mechanism 110;
FIG. 5 is a front view of the light emitting device 10 including a width directional position adjusting mechanism 120;
FIG. 6 is a perspective view of the light source 12 including a serrated LED base 130;
FIG. 7 is a side view of the light source 12 including the serrated LED base 130;
FIG. 8 is a perspective view of the light emitting device 10 including an entire angle adjusting mechanism 152;
FIG. 9 is a side view of the light emitting device 10 including the entire angle adjusting mechanism 152;
FIG. 10 is a front view of the light emitting device 10 according to modification 1;
FIG. 11 is a side view of the light emitting device 10 according to the modification 1;
FIG. 12 is a front view of the light emitting device 10 according to modification 2;
FIG. 13 is a side view of the light emitting device 10 according to the modification 2;
FIG. 14 is a perspective view of the light emitting device 10 according to modification 3;
FIG. 15 is a side view of the light emitting device 10 according to an alternative example of the modification 3;
FIG. 16 is a side view of the light emitting device 10 according to modification 8;
FIG. 17 is a plan view of a polarizing element 14 according to modification 9;
FIG. 18 is a plan view of the polarizing element 14 according to modification 10;
FIG. 19 is a plan view of the light emitting device 10 according to modification 11;
FIG. 20 is a perspective view of the light emitting device 10 according to the modification 11;
FIG. 21 is a plan view of the light emitting device 10 according to the modification 11;
FIG. 22 is a diagram exemplifying a driving electric power supply 180 according to the modification 11;
FIG. 23 is a diagram showing each LED module 100;
FIG. 24 is a diagram showing a positional relation among LED sets Y and Z and a measuring instrument 190 on an exposure surface Ain the modification 11;
FIG. 25 is a diagram showing a range of the exposure surface A irradiated with rays of light emitted from the LED sets Y and Z in the modification 11; and
FIG. 26 is a diagram showing a range of the exposure surface A irradiated with rays of light emitted from LED sets Y, Z, and V in the modification 11.

### DETAILED DESCRIPTION OF EMBODIMENTS

### (Configuration of Light Emitting Device 10)

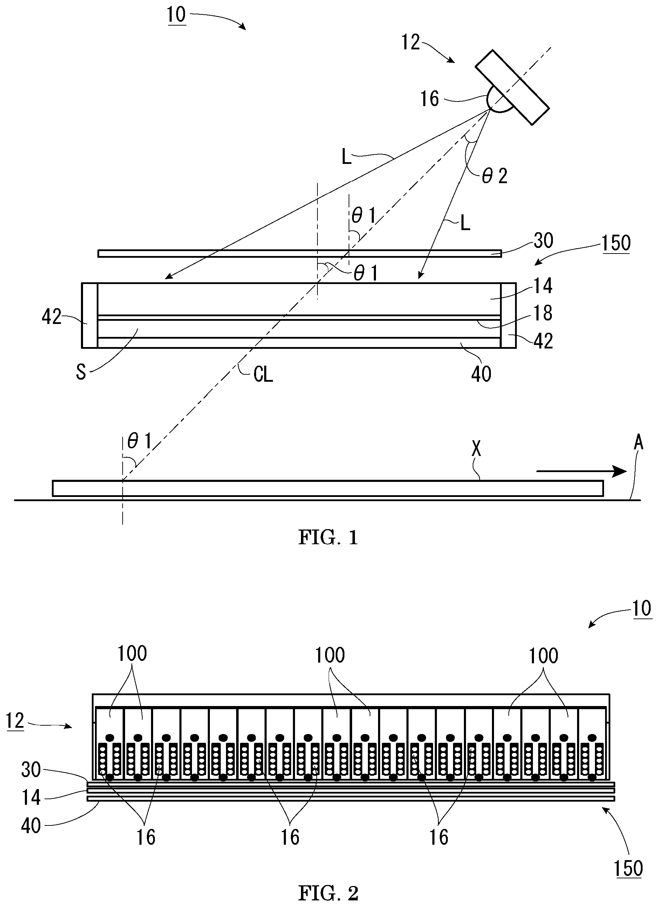

Alight emitting device 10 according to an exemplary embodiment to which the present invention is applied will be hereinafter explained. The light emitting device 10 is mainly used for light exposure in manufacturing a liquid crystal panel, while being embedded in an exposure apparatus. As shown in FIG. 1, the light emitting device 10 mainly includes a light source 12 and a polarizing element 14.

The light source 12 is a member for emitting rays of exposure light L to an exposure surface A on which a work (exposure object) X is disposed. In the present exemplary embodiment, a plurality of LEDs 16 are used for the light source 12. The LEDs 16 are configured to emit the rays of exposure light L so as to scan the work X moved on the exposure surface Ain a predetermined direction; hence, the light source 12 is formed by the plural LEDs 16 disposed approximately in series in a perpendicular direction to the moving direction of the work X. Obviously, the light emitting device 10 may be moved to emit the rays of exposure light L to the work X; alternatively, both the work X and the light emitting device 10 may be moved to emit the rays of exposure light L to the work X.

Besides, each of the LEDs 16 composing the light source 12 is disposed to tilt with respect to the work X (i.e., the exposure surface A) such that an optical axis CL thereof forms a first angle θ1 (i.e., an angle of incidence θ1) with respect to the work X. When a liquid crystal panel uses an alignment film formed by obliquely emitting rays of light with lesser variation among angular components, a stable pre-tilt angle and a stable alignment state can be produced; hence, the liquid crystal panel can be implemented in an arbitrary alignment mode.

It should be noted that as shown in FIG. 2, the light source 12 may be formed by a plurality of LED modules 100, each of which collectively accommodates a plurality of LEDs 16, and that are disposed to be aligned in, for instance, one direction.

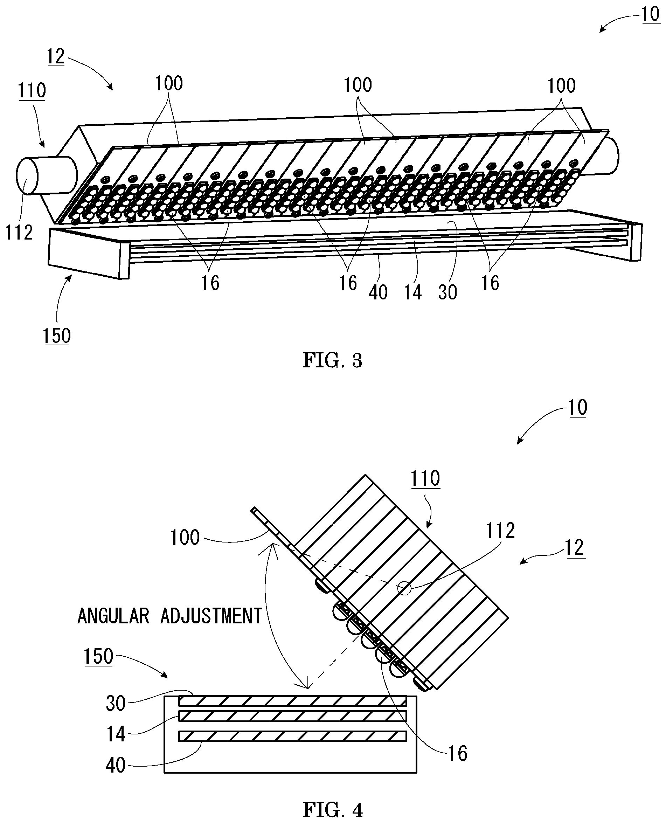

Moreover, as shown in FIGS. 3 and 4, an angle adjusting mechanism 110 may be provided to enable adjustment in emission angle of the rays of light from the entire light source 12 with respect to the polarizing element 14. The angle adjusting mechanism 110 herein exemplified includes a rotary shaft 112 extending along a direction in which the plural LED modules 100 composing the light source 12 are aligned. When the rotary shaft 112 is rotated, the emission angle of the rays of light from the entire light source 12 with respect to the polarizing element 14 is configured to be adjustable.

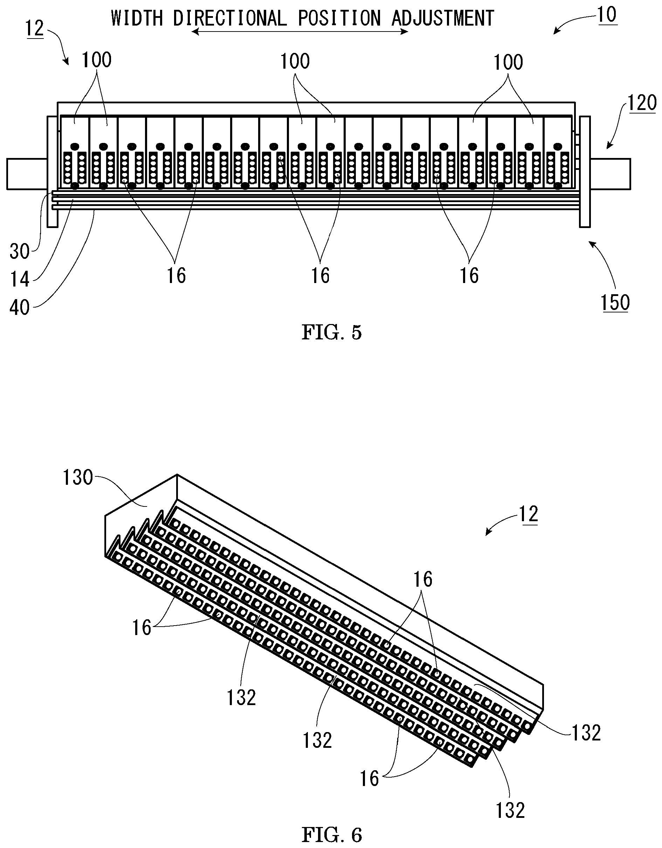

Furthermore, as shown in FIG. 5, a width directional position adjusting mechanism 120 may be provided to enable adjustment in position of the light source 12 with respect to the polarizing element 14 in the direction that the plural LED modules 100 are aligned. With this configuration, the positional adjustment is enabled to reduce unevenness in illuminance of the rays of light emitted from the respective LED modules 100.

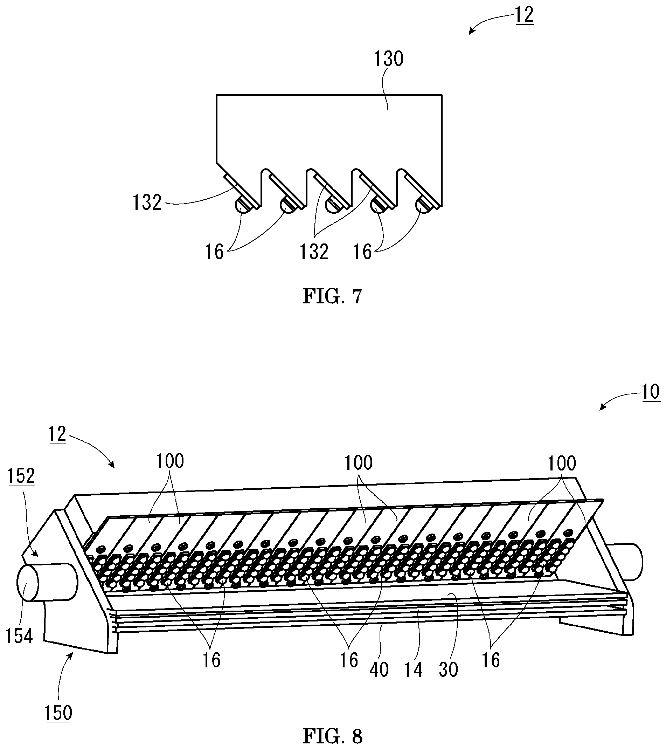

Alternatively, such a configuration as shown in FIGS. 6 and 7 may be employed instead of the configuration that a plurality of LED modules 100 are each disposed to form a predetermined angle with respect to the polarizing element 14. In this configuration, an LED base 130 with a cross section having a serrated shape is prepared; then, a plurality of LEDs 16 are disposed on each of slopes 132. The slopes 132 are herein disposed in correspondence to the teeth of the serrated shape so as to each form a predetermined angle with respect to the polarizing element 14.

Referring back to FIG. 1, a second angle θ2 is defined as half of the distribution angle of the rays of light L emitted from each LED 16 and is set to be less than the first angle θ1 described above.

The polarizing element 14 is an element for polarizing the rays of light emitted from the light source 12 by enabling only light components vibrating in one direction to transmit therethrough. In the present exemplary embodiment, a wire grid polarizing element is used as the polarizing element 14. The wire grid polarizing element is obtained by forming a wire grid on one of the surfaces of a transparent substrate (glass substrate). In the present exemplary embodiment, a wire grid formed surface 18 may be the light source 12-side surface of the polarizing element 14, or alternatively, may be the other surface thereof disposed on the opposite side of the light source 12. Besides, the polarizing element 14 is preferably arranged and set in parallel to the work X (the exposure surface A).

Such a configuration as shown in FIG. 4 may be employed as a modification of the polarizing element 14. In the configuration, an optical filter 30, the polarizing element 14, and a cover member 40 are sequentially disposed in this order from the closest side to the light source 12 and compose a polarizing element group 150.

The optical filter 30 is arranged and set between the light source 12 and the polarizing element 14. The optical filter 30, provided with a wavelength selective film on the surface thereof, is a member that selectively transmits therethrough the rays of light L emitted from the light source 12 only when the rays of light L have a predetermined wavelength or greater. Besides, the optical filter 30 is preferably arranged and set in parallel to the work X (the exposure surface A) in a similar manner to the polarizing element 14. It should be noted that as long as conditions to be described are satisfied, the following filters are usable as the optical filter 30: a long-pass filter that transmits therethrough rays of light with a predetermined wavelength or greater and a band-pass filter that transmits therethrough rays of light with a wavelength falling in a predetermined range but blocks rays of light with a wavelength shorter or longer than the predetermined range. Furthermore, the optical filter 30 may be arranged and set on the opposite side of the light source 12 from the polarizing element 14.

The cover member 40 is a plate material made of glass, for instance, and transmits therethrough the rays of light L emitted from the light source 12. The cover member 40 is arranged and set in parallel to the work X in a position opposed to the wire grid formed surface 18 on the polarizing element 14. In other words, when the wire grid formed surface 18 on the polarizing element 14 is disposed on the opposite side of the light source 12 as shown in FIG. 1, the cover member 40 is also arranged and set on the opposite side of the light source 12 from the polarizing element 14. Contrarily, when the wire grid formed surface 18 on the polarizing element 14 is disposed on the same side as the light source 12 (not shown in the drawings), the cover member 40 is also arranged and set on the same side as the light source 12 from the polarizing element 14.

It should be noted that an antireflective process may not be executed for the surfaces (of both faces) of the cover member 40 by forming thereon an antireflective film or so forth; however, it is preferred to execute the antireflective process for either or both surfaces of the cover member 40 by forming thereon the antireflective film or so forth.

Besides, it is preferred to seal a space S produced between the cover member 40 and the wire grid formed surface 18 on the polarizing element 14. For example, it can be assumed to seal the space S produced between the cover member 40 and the wire grid formed surface 18 on the polarizing element 14 by a holding frame 42 provided for holding the circumferential edges of the cover member 40 and those of the polarizing element 14.

It should be noted that the term "seal" described above means closing the space S enough to prevent intrusion of a minute solid object (e.g., siloxane compound) and does not necessarily mean perfectly closing the space S.

Besides, it is preferred to use a wire grid of a so-called "reflective type" for the polarizing element 14. This is because when the wire grid of "reflective type" is used, there is a low possibility of occurrence of the following situation: The wire grid is heated by the rays of light L emitted from the light source 12; the sealed space S undesirably increases in temperature; consequently, the wire grid formed surface 18 and so forth are damaged.

Furthermore, in order to cool the sealed space S, at least one of the constituent members of the space S including the cover member 40, the polarizing element 14, and the holding frame 42 may be cooled by a method of forced air cooling or water cooling.

It should be noted that a polarizing element group angle adjusting mechanism may be provided for enabling angular adjustment for the entire polarizing element group 150 with respect to the work X (the exposure surface A) or the light source 12. The polarizing element group angle adjusting mechanism may be of a type for executing angular adjustment collectively for the optical filter 30, the polarizing element 14, and the cover member 40, or alternatively, may be of another type for executing angular adjustment separately for the optical filter 30, the polarizing element 14, and the cover member 40.

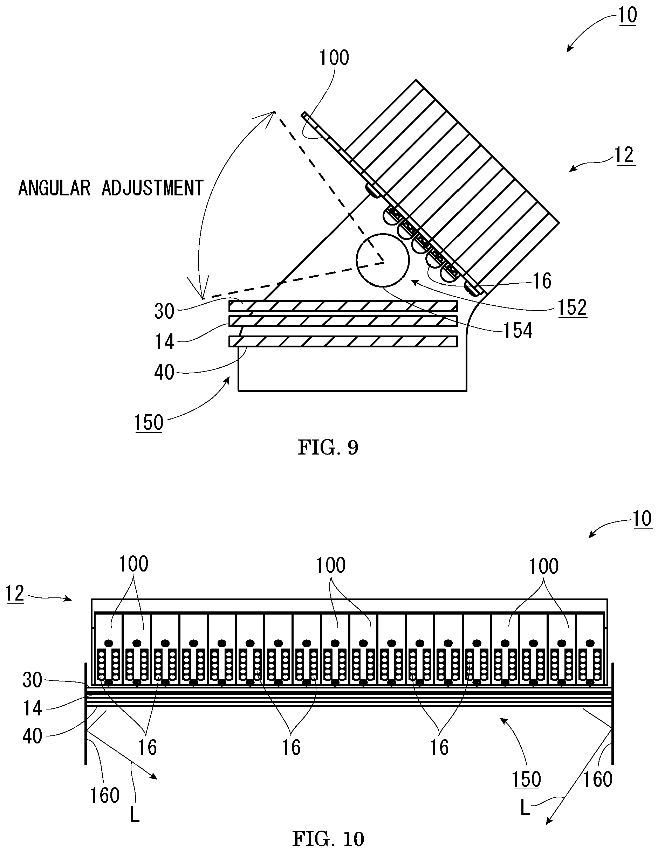

Furthermore, as shown in FIGS. 8 and 9, the aforementioned angle adjusting mechanism 110 for the light source 12 and the polarizing element group angle adjusting mechanism may be integrated as an entire angle adjusting mechanism 152 that enables angular adjustment collectively for the light source 12 and the polarizing element group 150 with respect to the work X (the exposure surface A). The entire angle adjusting mechanism 152 herein exemplified includes an entire rotary shaft 154 extending along the direction that the plural LED modules 100 composing the light source 12 are aligned and the extending direction of the polarizing element group 150 as well. When the entire rotary shaft 154 is rotated, the light emission angle of the entirety composed of the light source 12 and the polarizing element group 150 with respect to the work X (the exposure surface A) is configured to be adjustable.

Yet furthermore, a polarizing element group width directional position adjusting mechanism may be provided to enable adjustment in position of the polarizing element group 150 in the extending direction of the polarizing element group 150 (the direction that the plural LED modules 100 are aligned).

Still furthermore, an entire width directional position adjusting mechanism may be provided by integrating the width directional position adjusting mechanism 120 for the light source 12 and the polarizing element group width directional position adjusting mechanism described above. The entire width directional position adjusting mechanism executes adjustment in position of the light source 12 and the polarizing element group 150 in the extending direction of the polarizing element group 150 (the direction that the plural LED modules 100 are aligned).

### (Advantageous Effects of Light Emitting Device 10 According to Present Exemplary Embodiment)

In the light emitting device 10 according to the present exemplary embodiment, the optical axis CL of each of the plural LEDs 16 is tilted by the first angle θ1 with respect to the work X, and besides, the second angle θ2, corresponding to half of the distribution angle of the rays of light L emitted from each LED 16, is set to be less than the first angle θ1, whereby the rays of light L emitted from each LED 16 are all directed closer to the optical axis CL of each LED 16 than to the normal directed to the work X from each LED 16.

Accordingly, it is made possible to provide the light emitting device 10 for a light exposure apparatus, whereby a photo-alignment process can be executed with a simple and convenient configuration so as to emit a lot of rays of light at effective emission angles.

### Modification 1

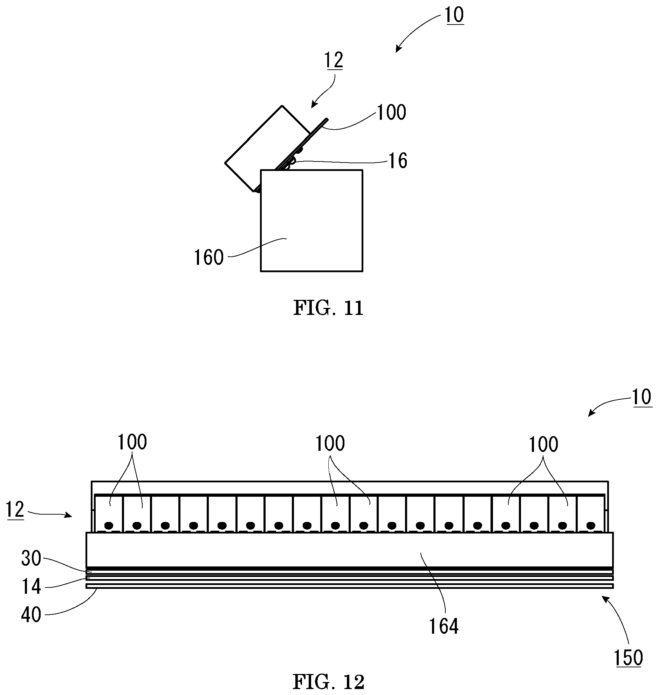

As shown in FIGS. 10 and 11, reflective mirrors 160 may be arranged and set on both width directional ends of both the light source 12 and the polarizing element group 150. Accordingly, it is possible to prevent degradation in illuminance on the work X (the exposure surface A) from both width directional ends of the light emitting device 10.

### Modification 2

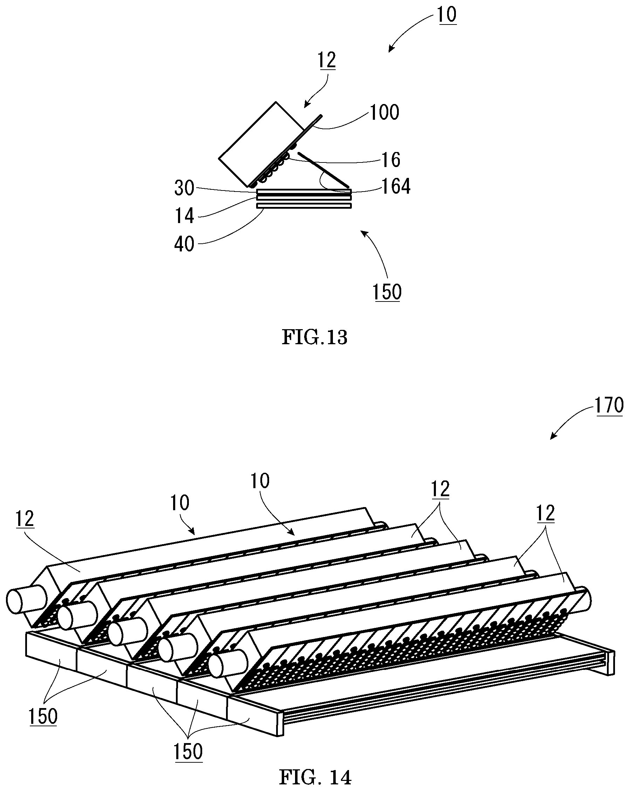

Besides, as shown in FIGS. 12 and 13, a width directional reflective mirror 164 may be arranged and set to extend in the width direction of both the light source 12 and the polarizing element group 150 so as to reflect rays of light that are part of the rays of light L emitted in a direction approximately perpendicular to the extending direction (width direction) of the light source 12 but are not incident on the polarizing element group 150.

Furthermore, the light emitting device 10 may be configured to include both the reflective mirrors 160 according to the modification 1 and the width directional reflective mirror 164 according to the modification 2.

### Modification 3

As shown in FIG. 14, a light source unit 170 may be formed by disposing a plurality of light emitting devices of the same type as the light emitting device 10 described above.

Besides, when the light source unit 170 is thus formed, it is preferred to enable angular adjustment for the light emitting devices 10 independently from each other. Furthermore, it is preferred as well to enable angular adjustment for each of the LED modules 100 and the polarizing element group 150, both of which are included in each light emitting device 10, independently from each other.

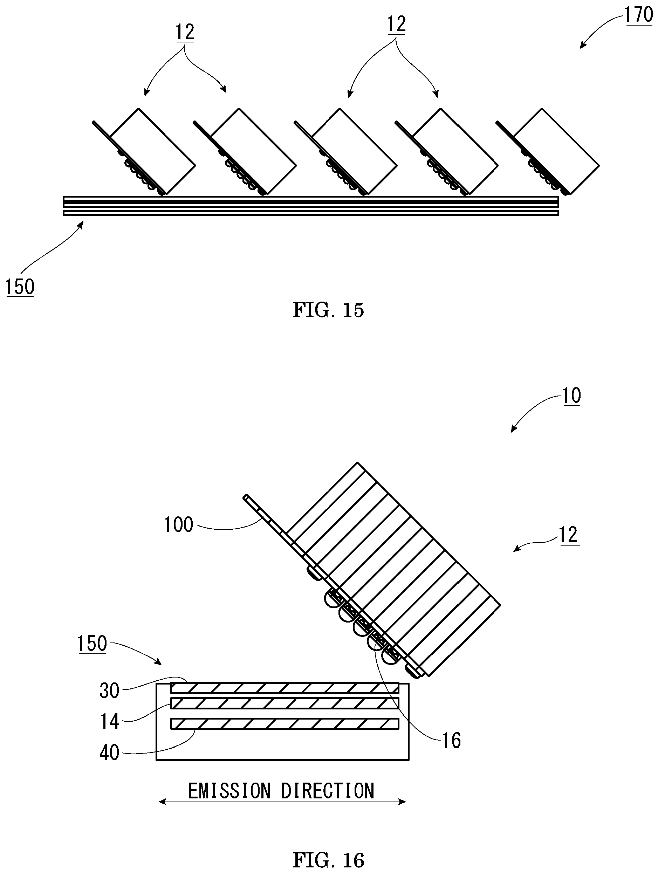

Moreover, the light source unit 170 may be configured such that one or more polarizing element groups 150 are lesser in number than two or more light sources 12, each of which is composed of the plural LED modules 100. For example, five light sources 12 are used in the light source unit 170 shown in FIG. 15, whereas only one polarizing element group 150 is used therein. The light source unit 170, configured as described above such that one or more polarizing element groups 150 are lesser in number than two or more light sources 12, is preferred in that occurrence of vignetting can be avoided in emitting the rays of light L from each light source 12. This is because the occurrence of vignetting is concerned in such a configuration that one or more light sources 12 and one or more polarizing element groups 150 are provided on a one-to-one basis (i.e., one or more light sources 12 are equal in number to one or more polarizing element groups 150).

### Modification 4

When the illuminance and the cumulative illuminance on the work (the exposure surface A), measured by a measuring instrument for measuring the illuminance on the work X (the exposure surface A), deviate from predetermined default values, it is preferred to adjust the illuminance and the cumulative illuminance of light by changing electric power to be inputted to each LED 16.

### Modification 5

It is preferred to calculate unevenness in the rays of light L on the work X (the exposure surface A) based on values of the illuminance and the cumulative illuminance on the work X (the exposure surface A) measured by the measuring instrument for measuring the illuminance on the work X (the exposure surface A) and then solving the unevenness by changing electric power to be inputted to the LEDs 16 located in correspondence to the unevenness.

Besides, when unevenness in illuminance and/or cumulative illuminance on the work X (the exposure surface A) occurs in at least one boundary between the polarizing element groups 150 adjacent to each other or at least one boundary between constituent elements (the polarizing element 14, the optical filter 30, and the cover member 40) adjacent to each other in the polarizing element group 150, it is preferred to solve the unevenness by changing electric power to be inputted to the LEDs 16 located in correspondence to the at least one boundary.

### Modification 6

Suppose the work X or at least the light source 12 is moved in a predetermined direction to execute light exposure for the work X. When unevenness in cumulative illuminance occurs in the moving direction, it is preferred to solve the unevenness by changing electric power to be inputted to the LEDs 16 corresponding to the unevenness during movement.

### Modification 7

The aforementioned illuminance and cumulative illuminance may be adjusted by keeping each LED 16 continuously turned on or off.

Alternatively, the aforementioned illuminance and cumulative illuminance may be adjusted by repeatedly turning each LED 16 on and off.

### Modification 8

It is preferred to shape the polarizing element 14 (wire grid), composing part of the polarizing element group 150, to be elongated in a direction that the rays of light L are emitted from each light source 12 as shown in FIG. 16.

### Modification 9

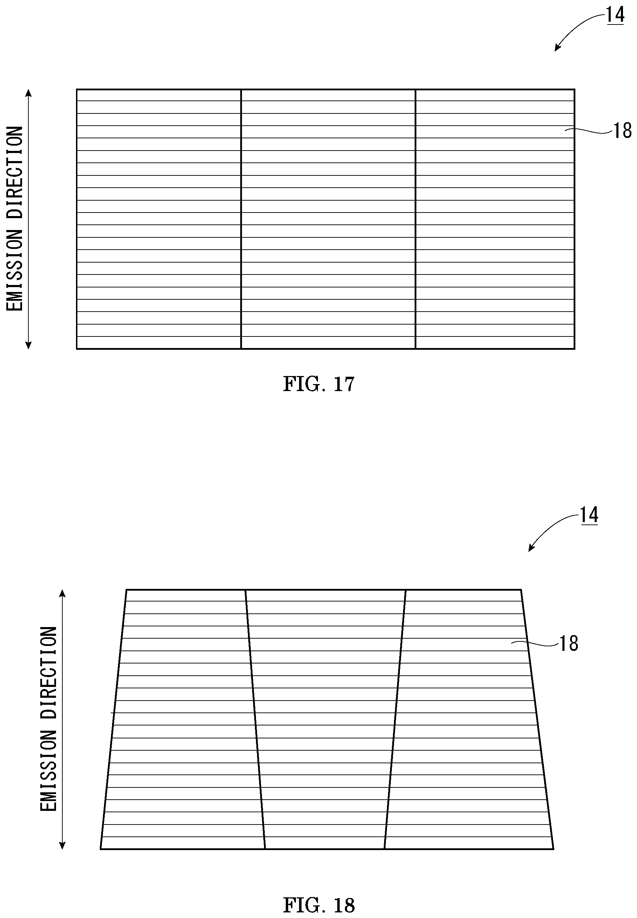

Alternatively, the wire grid, composing part of the polarizing element 14, may be shaped as shown in FIG. 17 by the following procedure: First, a wire grid is formed on a disc-shaped wafer; then, the disc-shaped water is cut into rectangular pieces; finally, three of the rectangular pieces are aligned in a direction perpendicular to the direction that the rays of light L are emitted from each light source 12 (i.e., in the direction that the LED modules 100 are aligned).

### Modification 10

Alternatively, the wire grid, composing part of the polarizing element 14, may be shaped as shown in FIG. 18, by the following procedure: First, wire grid pieces are each formed to have an approximately trapezoidal shape; then, the wire grid pieces are disposed such that the trapezoidal bottom side of a given wire grid piece is aligned approximately straight with the trapezoidal top side of another wire grid piece adjacent to the given wire grid piece in the direction perpendicular to the direction that the rays of light L are emitted from each light source 12 (i.e., the direction that the LED modules 100 are aligned). When the wire grid pieces, each having the approximately trapezoidal shape, are disposed as described above, unevenness in illuminance or cumulative illuminance occurs in the direction that the rays of light L are emitted from each light source 12 in a wider range than the configuration in the modification 9; however, unevenness in illuminance or cumulative illuminance is reduced in severity by that much. Because of this, the configuration herein described is preferred in terms of easiness in adjustment of the illuminance and the cumulative illuminance.

### Modification 11

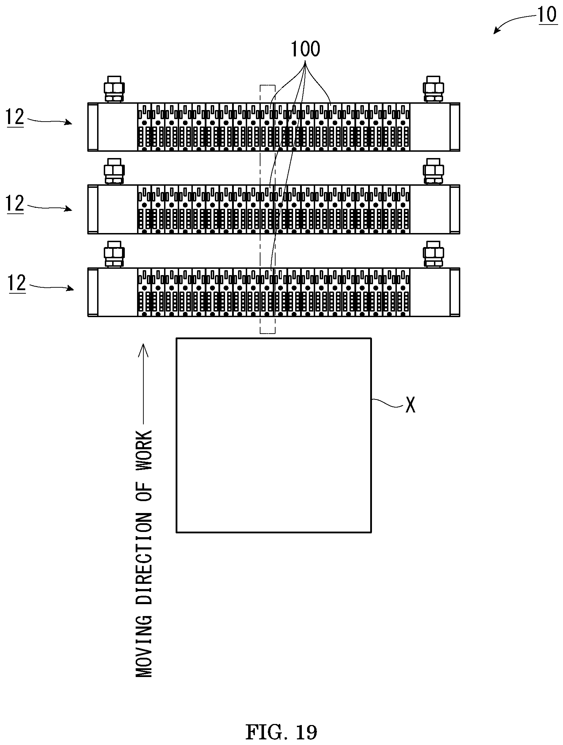

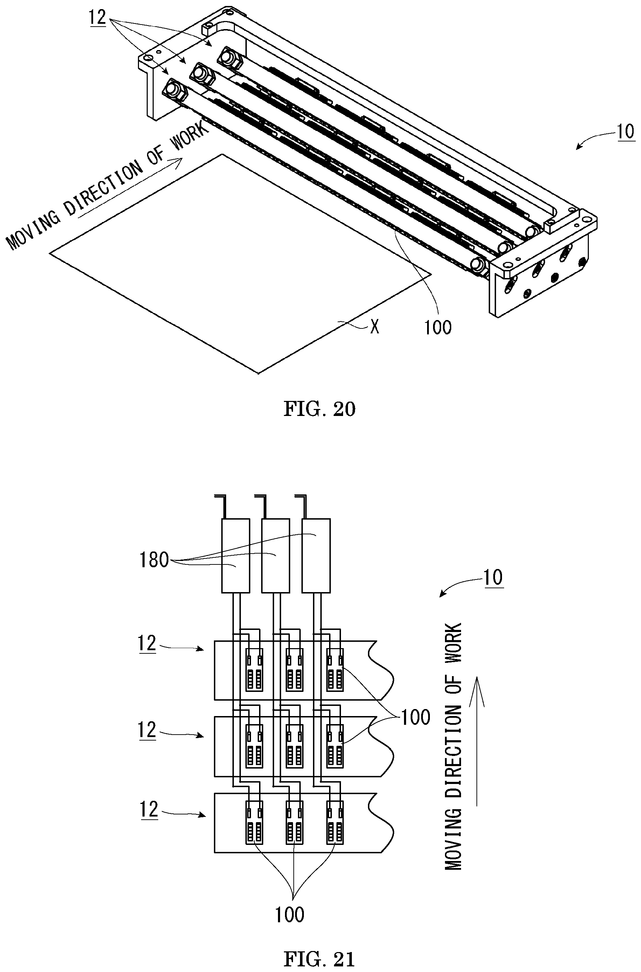

Alternatively, as shown in FIGS. 19 and 20, a plurality of (three in modification 11) light sources, which are of the same type as the light source 12 shown in FIG. 2, may be aligned along the moving direction of the work X. In this case, a group of LED modules 100, each of which is selected from each of the light sources 12, is disposed to be aligned straight along the moving direction of the work X (see the LED modules 100 enclosed with a dashed dotted line in FIG. 19). The plural LED modules 100, which are aligned straight and are disposed in the light sources 12 different from each other, will be hereinafter referred to as "a common group of the LED modules 100". It should be noted that the LED modules 100 in the common group may or may not be disposed on a common imaginary plane.

Furthermore, as shown in FIG. 21, a plurality of common groups of the LED modules 100 are supplied with electricity from a plurality of driving electric power supplies 180 on a one-to-one basis. With this configuration, the illuminance of the rays of light emitted from the LED modules 100 in each common group can be adjusted by each driving electric power supply 180. It should be noted that FIG. 21 exemplifies a configuration that the LED modules 100 in each common group are supplied with electricity in parallel from each driving electric power supply 180; instead, the LED modules 100 in each common group may be supplied with electricity in series from each driving electric power supply 180.

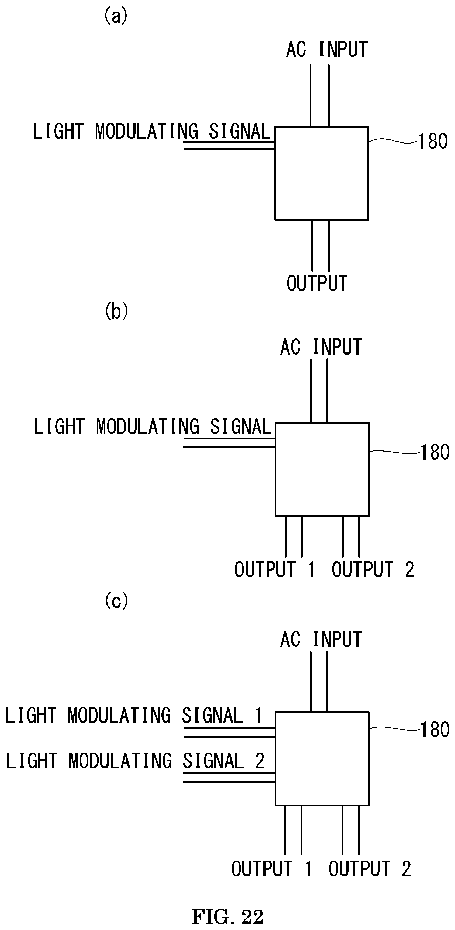

Now, a modification of the driving electric power supply 180 will be explained. As shown in diagram (a) of FIG. 22, the single driving electric power supply 180 may be configured to receive a single light modulating signal inputted thereto and output electricity to a single common group of the LED modules 100. Alternatively, as shown in diagram (b) of FIG. 22, the single driving electric power supply 180 may be configured to receive a single light modulating signal inputted thereto and output electricity to a plurality of (two in this example) common groups of the LED modules 100. Yet alternatively, as shown in diagram (c) of FIG. 22, the single driving electric power supply 180 may be configured to receive a plurality of (two in this example) light modulating signals inputted thereto and output electricity to a plurality of (two in this example) common groups of the LED modules 100.

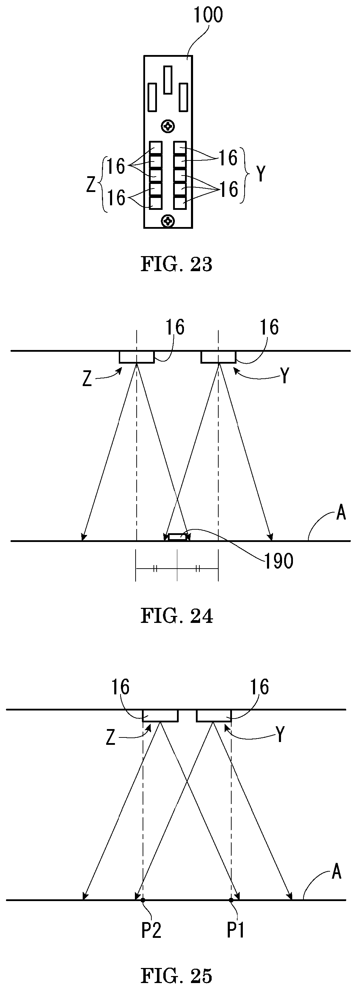

Furthermore, as shown in FIG. 23, each of the LED modules 100 according to the modification 11 is configured such that two LED sets, each of which is composed of five LEDs 16 disposed in straight alignment, are disposed to be aligned in parallel to each other.

Now, explanation will be made regarding a method of adjusting the illuminance of the rays of light emitted from each LED 16 through the driving electric power supply 180 in use of the LED modules 100, in each of which two LED sets Y and Z are disposed as described above.

As shown in FIG. 24, a measuring instrument 190 is set to measure illuminance in a position corresponding to the middle of one LED set Y and the other LED set Z on the exposure surface A. Accordingly, the measuring instrument 190 measures the illuminance of the rays of light emitted from the one LED set Y and that of the rays of light emitted from the other LED set Z.

Specifically, the measuring instrument 190 is set on the exposure surface A and measures the cumulative illuminance for the LED modules 100 in each common group, while being moved in the moving direction of the work X (scanning measurement). When completing measurement of the illuminance of the rays of light emitted from the LED modules 100 in a given common group, the measuring instrument 190 is shifted on the exposure surface Ain the width direction of the light source 12 and measures the cumulative illuminance of the rays of light emitted from the LED modules 100 in another common group adjacent to the given common group. The scanning measurement is sequentially executed for the remaining common groups, whereby the cumulative illuminance is measured for all the common groups. Obviously, it is not herein required to move the measuring instrument 190; instead, the light emitting device 10 may be moved with respect to the measuring instrument 190; alternatively, both the measuring instrument 190 and the light emitting device 10 may be moved with respect to each other.

Based on the illuminance measured by the measuring instrument 190, a light modulating signal, serving to make optimal the illuminance of the rays of light emitted from target LED modules 100, is outputted from a control device (not shown in the drawings) and is inputted to a driving electric power supply 180 relevant to the target LED modules 100. Accordingly, adjustment is made for electricity to be outputted to the target LED modules 100 from the driving electric power supply 180 receiving the light modulating signal; finally, in each of the target LED modules 100, adjustment is made for the illuminance of the rays of light emitted from the LED set Y and that of the rays of light emitted from the LED set Z.

As described above, adjustment in illuminance by the driving electric power supply 180 is made for the LED modules 100 in each common group as a unit. Obviously, adjustment in illuminance by the driving electric power supply 180 is not limited to this configuration, and alternatively, may be made for the LED sets in each LED module 100 as a unit or even for the LEDs 16 in each LED set as a unit.

It should be noted that as shown in FIG. 25, the distribution angle of the rays of light emitted from each LED 16 and the distance between the exposure surface A and each LED 16 are preferably set to enable a region between positions P1 and P2 on the exposure surface A to be illuminated by two LEDs 16 that are included in the different LED sets Y and Z and are located in adjacent to each other. The positions P1 and P2 are herein defined as the positions that two imaginary lines (dashed dotted lines in FIG. 25), extended vertically downward from the outer ends of the two LEDs 16, intersect with the exposure surface A.

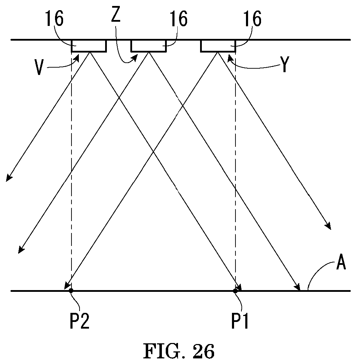

FIG. 26 shows an example, to which the logic of the example in FIG. 25 is applied, and that three LED sets Y, Z, and V are used in each LED module 100. Here, a region between positions P1 and P2 on the exposure surface A can be illuminated by the LEDs 16 included in all the LED sets (three LED sets in this example). The positions P1 and P2 are herein defined as the positions that two imaginary lines (dashed dotted lines in FIG. 26), extended vertically downward from the outer ends of the LEDs 16 included in the LED sets Y and V located on both ends of the three LED sets Y, Z, and V, intersect with the exposure surface A. The logic of the example in FIG. 25 is similarly applicable to an example that a single LED set is used in each LED module 100 and even to an example that four or more LED sets are used in each LED module 100.

### REFERENCE SIGNS LIST

10...Light emitting device, 12... Light source, 14...Polarizing element, 16...LED, 18... Wire grid formed surface, 30...Optical filter, 40... Cover member, 42... Holding frame, 100... LED module, 110...Angle adjusting mechanism, 112... Rotary shaft, 120...Width directional position adjusting mechanism, 130...LED base, 132... Slope, 150...Polarizing element group, 152...Entire angle adjusting mechanism, 154... Entire rotary shaft, 160...Reflective mirror, 164...Width directional reflective mirror, 170...Light source unit, 180... Driving electric power supply, 190... Measuring instrument, X...Work (exposure object), A... Exposure surface, L...Exposure light, CL...Optical axis (of LED 16), θ1...First angle, θ2...Second angle, S...Space (between cover member 40 and wire grid formed surface 18), Y...One LED set, Z...Other LED set, V...Another LED set

## Claims

1. Alight emitting device (10) comprising:
a light source (12) including a plurality of LEDs (16); and
a polarizing element (14) receiving rays of light (L) emitted from the light source (12), the polarizing element (14) causing at least in part the rays of light (L) to transmit therethrough and be then incident on a work (X), the work being an exposure object, wherein
each of the plurality of LEDs (16) has an optical axis tilting at a first angle (θ1) with respect to the work (X),
a second angle (θ2) is defined as half of a light distribution angle of the rays of light (L) emitted from the each of the plurality of LEDs (16), the second angle (θ2) set to be less than the first angle (θ1), and
an illuminance and a cumulative illuminance of the rays of light (L) incident on the work (X) or an exposure surface are adjusted by changing electricity to be inputted to the plurality of LEDs (16);
**characterized in that**
the light source (12) includes a plurality of LED modules (100), each of the plurality of LED modules (100) accommodating the plurality of LEDs (16),
the light source (12) is provided as one of a plurality of light sources (12) aligned along a moving direction of the work (X), and
the electricity to be inputted to the plurality of LEDs (16) is adjusted by a single driving electric power supply when the plurality of LEDs (16) are accommodated in each of a plurality of LED modules (100) that are separately disposed in the plurality of light sources (12) on a one-to-one basis so as to be aligned straight along the moving direction of the work (X).

2. The light emitting device (10) according to claim 1, further comprising:
a measuring instrument (190) measuring the illuminance on the work (X) or the exposure surface, wherein
when unevenness of the rays of light (L) on the work (X) or the exposure surface is found by calculation based on values measured by the measuring instrument (190) as the illuminance and the cumulative illuminance on the work (X) or the exposure surface, the unevenness of the rays of light (L) on the work (X) or the exposure surface is solved by changing the electricity to be inputted to at least one of the plurality of LEDs (16) located in correspondence to the unevenness of the rays of light (L) on the work (X) or the exposure surface.

3. The light emitting device (10) according to claim 1 or 2, wherein the polarizing element (14) is shaped to be elongated in a direction of the rays of light (L) emitted from the light source (12).

4. The light emitting device (10) according to claim 1 or 2, wherein
the polarizing element (14) is formed by a plurality of wire grid pieces,
each of the plurality of wire grid pieces has a trapezoidal shape, and
each adjacent pair of the plurality of wire grid pieces is disposed such that a trapezoidal bottom side of one of the each adjacent pair is aligned straight with a trapezoidal top side of the other of the each adjacent pair in a perpendicular direction to a direction of the rays of light (L) emitted from the light source (12).

5. The light emitting device (10) according to any one of claims 1 to 4, wherein the polarizing element (14) is provided as one of a single or plurality of polarizing elements (14), the light source (12) provided as one of a plurality of light sources (12), the single or plurality of polarizing elements (14) lesser in number than the plurality of light sources (12).

6. An exposure apparatus including the light emitting device (10) recited in any one of claims 1 to 5.

## Patentansprüche

1. Lichtemittierende Vorrichtung (10), aufweisend:
eine Lichtquelle (12) mit mehreren LEDs (16); und
ein polarisierendes Element (14), das Lichtstrahlen (L) empfängt, die von der Lichtquelle (12) emittiert werden, wobei das polarisierende Element (14) zumindest teilweise bewirkt, dass die Lichtstrahlen (L) durch es hindurch übertragen werden und dann auf ein Werkstück (X) einfallen, wobei das Werkstück ein Belichtungsobjekt ist, wobei
jede der mehreren LEDs (16) eine optische Achse aufweist, die in einem ersten Winkel (θ1) in Bezug auf das Werkstück (X) geneigt ist,
ein zweiter Winkel (θ2) als die Hälfte eines Lichtverteilungswinkels der Lichtstrahlen (L) definiert ist, die von jeder der mehreren LEDs (16) emittiert werden, wobei der zweite Winkel (θ2) kleiner als der erste Winkel (θ1) eingestellt ist, und
eine Beleuchtungsstärke und eine kumulative Beleuchtungsstärke der Lichtstrahlen (L), die auf das Werkstück (X) oder eine Belichtungsfläche einfallen, durch Ändern von Elektrizität eingestellt werden, die in die mehreren LEDs (16) eingegeben werden soll;
**dadurch gekennzeichnet, dass**
die Lichtquelle (12) mehrere LED-Module (100) aufweist, wobei jedes der mehreren LED-Module (100) mehrere der LEDs (16) aufnimmt,
die Lichtquelle (12) als eine von mehreren Lichtquellen (12) vorgesehen ist, die entlang einer Bewegungsrichtung des Werkstücks (X) ausgerichtet sind, und
die Elektrizität, die in die mehreren LEDs (16) eingegeben werden soll, durch eine einzelne Antriebsstromversorgung eingestellt wird, wenn die mehreren LEDs (16) in den mehreren LED-Modulen (100) aufgenommen sind, die in den mehreren Lichtquellen (12) auf einer Eins-zu-Eins-Basis getrennt angeordnet sind, um gerade entlang der Bewegungsrichtung des Werkstücks (X) ausgerichtet zu sein.

2. Lichtemittierende Vorrichtung (10) nach Anspruch 1, ferner aufweisend:
ein Messinstrument (190), das die Beleuchtungsstärke auf dem Werkstück (X) oder der Belichtungsfläche misst, wobei
wenn eine Ungleichmäßigkeit der Lichtstrahlen (L) auf dem Werkstück (X) oder der Belichtungsfläche durch Berechnung basierend auf Werten gefunden wird, die durch das Messinstrument (190) als die Beleuchtungsstärke und die kumulative Beleuchtungsstärke auf dem Werkstück (X) oder der Belichtungsfläche gemessen werden, die Ungleichmäßigkeit der Lichtstrahlen (L) auf dem Werkstück (X) oder der Belichtungsfläche durch Ändern der Elektrizität gelöst wird, die in mindestens eine der mehreren LEDs (16) eingegeben werden soll, die sich in Übereinstimmung mit der Ungleichmäßigkeit der Lichtstrahlen (L) auf dem Werkstück (X) oder der Belichtungsfläche befinden.

3. Lichtemittierende Vorrichtung (10) nach Anspruch 1 oder 2, wobei das polarisierende Element (14) so geformt ist, dass es in einer Richtung der Lichtstrahlen (L), die von der Lichtquelle (12) emittiert werden, länglich ist.

4. Lichtemittierende Vorrichtung (10) nach Anspruch 1 oder 2, wobei
das polarisierende Element (14) durch mehrere Drahtgitterstücke gebildet ist,
jedes der mehreren Drahtgitterstücke eine Trapezform aufweist, und
jedes benachbarte Paar der mehreren Drahtgitterstücke so angeordnet ist, dass eine trapezförmige Unterseite eines jeden benachbarten Paars mit einer trapezförmigen Oberseite des anderen jeden benachbarten Paars in einer Richtung senkrecht zu einer Richtung der Lichtstrahlen (L), die von der Lichtquelle (12) emittiert werden, gerade ausgerichtet ist.

5. Lichtemittierende Vorrichtung (10) nach einem der Ansprüche 1 bis 4, wobei das polarisierende Element (14) als eines von einem einzelnen oder mehreren polarisierenden Elementen (14) vorgesehen ist, die Lichtquelle (12) als eine von mehreren Lichtquellen (12) vorgesehen ist, die Anzahl des einzelnen oder der mehreren polarisierenden Elemente (14) geringer ist als die der mehreren Lichtquellen (12).

6. Belichtungsvorrichtung mit der lichtemittierenden Vorrichtung (10) nach einem der Ansprüche 1 bis 5.

## Revendications

1. Dispositif électroluminescent (10) comprenant :
une source de lumière (12) comprenant une pluralité de LED (16) ; et
un élément de polarisation (14) recevant des rayons de lumière (L) émis par la source de lumière (12), l'élément de polarisation (14) amenant au moins en partie les rayons de lumière (L) à transmettre à travers celui-ci et à être ensuite incidents sur une pièce (X), la pièce étant un objet d'exposition, dans lequel
chacune de la pluralité de LED (16) a un axe optique s'inclinant selon un premier angle (θ1) par rapport à la pièce (X),
un second angle (θ2) est défini comme la moitié d'un angle de distribution de lumière des rayons de lumière (L) émis par chacune de la pluralité de LED (16), le second angle (θ2) étant réglé pour être inférieur au premier angle (θ1), et
un éclairement et un éclairement cumulatif des rayons de lumière (L) incidents sur la pièce (X) ou une surface d'exposition sont ajustés en changeant l'électricité à entrer dans la pluralité de LED (16) ;
**caractérisé en ce que**
la source de lumière (12) comprend une pluralité de modules de LED (100), chacun de la pluralité de modules de LED (100) logeant la pluralité de LED (16),
la source de lumière (12) est prévue comme l'une d'une pluralité de sources de lumière (12) alignées le long d'une direction de déplacement de la pièce (X), et
l'électricité à entrer dans la pluralité de LED (16) est ajustée par une alimentation électrique d'entraînement unique lorsque la pluralité de LED (16) sont logées dans chacun d'une pluralité de modules de LED (100) qui sont disposés séparément dans la pluralité de sources de lumière (12) sur une base biunivoque de manière à être alignées en ligne droite le long de la direction de déplacement de la pièce (X).

2. Dispositif électroluminescent (10) selon la revendication 1, comprenant en outre:
un instrument de mesure (190) mesurant l'éclairement sur la pièce (X) ou la surface d'exposition, dans lequel
lorsqu'une irrégularité des rayons de lumière (L) sur la pièce (X) ou la surface d'exposition est trouvée par calcul sur la base de valeurs mesurées par l'instrument de mesure (190) comme l'éclairement et l'éclairement cumulatif sur la pièce (X) ou la surface d'exposition, l'irrégularité des rayons de lumière (L) sur la pièce (X) ou la surface d'exposition est résolue en changeant l'électricité à entrer dans au moins l'une de la pluralité de LED (16) située en correspondance avec l'irrégularité des rayons de lumière (L) sur la pièce (X) ou la surface d'exposition.

3. Dispositif électroluminescent (10) selon la revendication 1 ou 2, dans lequel l'élément de polarisation (14) est formé pour être allongé dans une direction des rayons de lumière (L) émis par la source de lumière (12).

4. Dispositif électroluminescent (10) selon la revendication 1 ou 2, dans lequel
l'élément de polarisation (14) est formé par une pluralité de pièces de grille métallique,
chacune de la pluralité de pièces de grille métallique a une forme trapézoïdale, et
chaque paire adjacente de la pluralité de pièces de grille métallique est disposée de sorte qu'un côté inférieur trapézoïdal de l'une de chaque paire adjacente est aligné en ligne droite avec un côté supérieur trapézoïdal de l'autre de chaque paire adjacente dans une direction perpendiculaire à une direction des rayons de lumière (L) émis par la source de lumière (12).

5. Dispositif électroluminescent (10) selon l'une quelconque des revendications 1 à 4, dans lequel l'élément de polarisation (14) est prévu comme l'un d'un seul ou d'une pluralité d'éléments de polarisation (14), la source de lumière (12) étant prévue comme l'une d'une pluralité de sources de lumière (12), le seul ou la pluralité d'éléments de polarisation (14) étant moins nombreux que la pluralité de sources de lumière (12).

6. Appareil d'exposition comprenant le dispositif électroluminescent (10) selon l'une quelconque des revendications 1 à 5.
